# EUROPÄISCHE PATENTSCHRIFT

(11) **EP 1 807 276 B1**
(45) Veröffentlichungstag und Bekanntmachung des Hinweises auf die Patenterteilung: **24.09.2008**
(21) Anmeldenummer: 05801014.1
(22) Anmeldetag: 13.10.2005
(51) Int. Cl.: B60J 7/20, B60J 7/185

(54) **VERRIEGELUNGSEINRICHTUNG FÜR EIN CABRIOLETVERDECK**
LOCKING DEVICE FOR A CABRIOLET HOOD
DISPOSITIF DE VERROUILLAGE POUR UNE CAPOTE DE CABRIOLET

(30) Priorität: 27.10.2004 DE 102004052236
(43) Veröffentlichungstag der Anmeldung: 18.07.2007
(73) Patentinhaber: Wilhelm Karmann GmbH, 49084 Osnabrück (DE)
(72) Erfinder: HABACKER, Norbert, 49565 Bramsche (DE)
(74) Vertreter: Kramer - Barske - Schmidtchen
(86) Internationale Anmeldenummer: PCT/DE2005/001826
(87) Internationale Veröffentlichungsnummer: WO 2006/045269

(56) Entgegenhaltungen:
- DE-A1- 10 252 987
- DE-B- 1 060 725
- DE-C1- 19 959 700
- US-B1- 6 361 086

## Beschreibung

Die Erfindung betrifft eine Verriegelungseinrichtung für ein Cabrioletverdeck, mit der ein Cabrioletverdeck, insbesondere ein in Z-Faltung ablegbares Cabrioletverdeck in der geöffneten Position in abgelegter Position, d.h. bei offenem Dach, verriegelt werden kann.

Bei in Z-Faltung gefalteten Cabrioletdächern, wie z.B. in US 6361086 liegt der vordere Dachabschnitt in Ablageposition in gleicher Orientierung wie in geschlossener Position und stellt in Ablageposition den oberen Abschluss des Dachpakets dar. Wenn das Dach geöffnet ist, muss das gefaltete Dach in der Ablageposition verriegelt werden, ohne dass auf einen Verdeckkastendeckel wie bei konventionell gefalteten Dächern zurückgegriffen werden kann, an dem Verriegelungselemente befestigt werden könnten.

Bei konventionell gefalteten Dächern, wie beispielsweise eines in DE 102 52 987 A1 beschrieben ist, wird am Verdeckkastendeckel ein Niederhalter vorgesehen, mit dem die gefaltete Dachhaut in einer gesicherten Lage im Verdeckkasten gehalten wird. Der Niederhalter wird durch ein am Verdeckkastendeckel gelagertes Gegenglied und ein am zurückgeklappten Verdeck vorgesehenes Auflageteil gebildet.

Aus der DE 195 07 431 C1 ist ein Hardtop-Fahrzeug bekannt, das ein zweiteiliges Klappdach mit einem vorderen Dachteil und einem Rückfensterteil besitzt. Am vorderen Dachteil sind Verbindungsglieder zum Windschutzscheibenrahmen vorgesehen, um das Fahrzeugdach in geschlossener Dachposition am Windschutzscheibenrahmen zu befestigen. Wenn die Dachkonstruktion in den heckseitigen Verdeckkasten abgelegt ist, wirken die Verbindungsglieder mit im Heckbereich des Fahrzeugs karosserieseitig abgestützten Arretierungsteilen paarweise zusammen und legen so die zusammengeklappte Dachkonstruktion fest. Auch aus der DE 195 33 802 C1 ist eine Dachkonstruktion bekannt, bei der die Verriegelungsorgane zur Sicherung des Dachs in der geschlossenen Position als Verriegelungseinrichtung in abgelegter Position wirken.

Eine solche Verriegelung des Verdecks mit dem Dachverschluss in der abgelegten Position wird auch bei Dächern in Z-Faltung angewendet, die beispielsweise in der DE 198 01 876 A1 oder DE 103 24 071 A1 beschrieben sind. Insbesondere bei einem vollautomatischen Verdeck in Z-Faltung wird das Verdeck mit dem Dachverschluss auch in der abgelegten Position fixiert. Allerdings ist dies aufgrund der eingeschränkten Zugänglichkeit schwierig, wenn der Verdeckverschluss manuell zu betätigen ist oder wenn der Verdeckverschluss im äußeren Bereich der Dachspitze angeordnet ist.

Davon ausgehend ist es Aufgabe der Erfindung, eine Verriegelungseinrichtung für ein Cabrioletverdeck zu schaffen, die von der Verschlussvorrichtung des Dachs unabhängig ist und welche das Design des Cabrioletverdecks wenig beeinträchtigt. Außerdem soll die Verriegelungseinrichtung auch bei einem Cabrioletverdeck in z-Faltung ohne Verdeckkastendeckel eine zuverlässige Dachsicherung gewährleisten.

Diese Aufgabe wird mit einer Verriegelungseinrichtung mit den Merkmalen des Anspruchs 1 gelöst. Bevorzugte Ausführungsformen sind durch die übrigen Ansprüche angegeben.

Der Erfindung liegt der Gedanke zugrunde, eine aus einem Rastelement, z.B. einem Rastbolzen, und einem damit zusammenwirkenden Gegenelement, z.B. einem Rastloch, ausgebildete Verriegelungseinrichtung derart anzuordnen, dass sie selbsttätig bei einer Bewegung des Verdecks in die Ablageposition in eine aktive Betriebsposition gebracht wird und andernfalls in einer Ruheposition, in welcher sie im Ablagebereich des Verdecks verborgen liegt, angeordnet ist.

Neben der Bewegung des Rastelements mit einer zugehörigen Halterung in die aktive Position ist die Anordnung vorzugsweise ferner derart, dass bei einer fortgesetzten Bewegung des Verdecks in die Ablageposition eine selbsttätige Verrastung erfolgt, d.h. dass die Bewegung des Rastelements durch die Bewegung des Cabrioletverdecks bewirkt wird, wobei vorzugsweise zur Bewegungsübertragung Koppelglieder vorgesehen sind, und das Rastelement in die Rastposition gebracht wird. Beispielsweise kann dies durch fortgesetztes Vorbelasten des Bolzens in Rastrichtung durch Spannen eines Federelements bewirkt werden. Die Bewegungen des in der Halterung gelagerten Elements in die aktive Position sowie die Bewegung des Rastelements oder des Gegenelements in die durch die Vorbelastungseinrichtung in Verriegelungsrichtung vorbelastete Position sind im Wesentlichen in entgegensetzten Richtungen.

Die Begriffe Rastelement bzw. Gegenelement beziehen sich dabei im weitesten Sinn auf alle Arten von Rastelementen, die zumindest zweiteilig an zwei zu verrastenden Bauteilen ausgebildet sind und miteinander in Wechselwirkung derart treten können, dass sie eine Sicherung der Bauteile aneinander ermöglichen.

Nachfolgend wird die Erfindung beispielhaft anhand der beigefügten Figuren beschrieben, in denen:
- Figur 1: den karosserieseitigen Teil einer Verriegelungseinrichtung für ein Cabrioletverdeck in einer Ausführungsform der Erfindung zeigt;
- Figur 2: eine Explosionsansicht der in Figur 1 gezeigten Verriegelungseinrichtung ist;
- Figur 3: die Verriegelungseinrichtung in einer ersten Arbeitsposition zeigt;
- Figur 4: die Verriegelungseinrichtung bei weiter fortgesetztem Ablagevorgang des Cabrioletverdecks in Ablageposition zeigt;
- Figur 5: die Verriegelungseinrichtung in Rastposition zeigt; und
- Figur 6: die Verriegelungseinrichtung nach dem Lösen der Verriegelung zeigt.

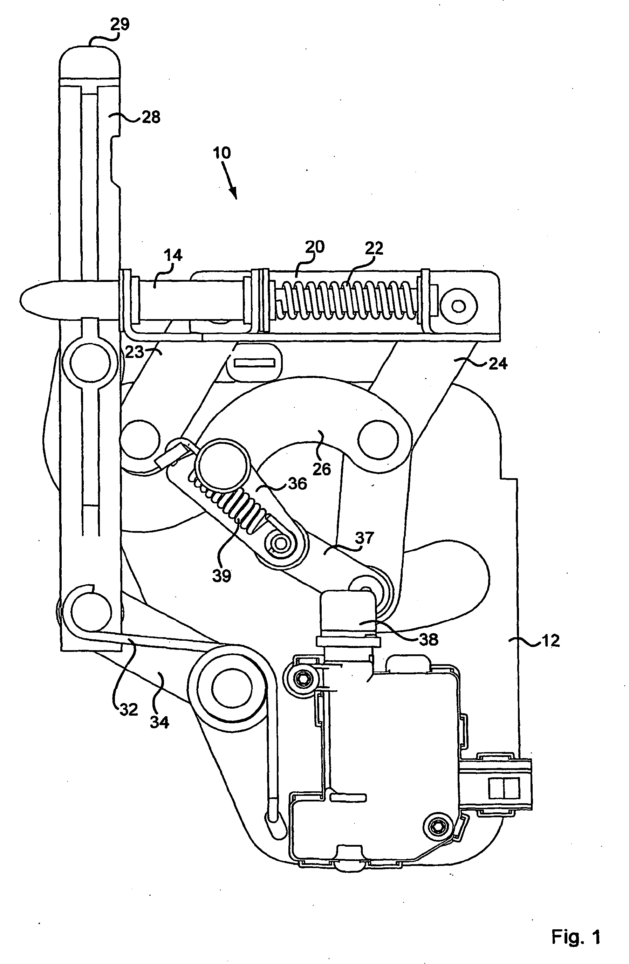

In Figur 1 ist in einer Seitenansicht eine Verriegelungseinrichtung 10 dargestellt. Die Verriegelungseinrichtung 10 wird von einer Abdeckung 12 zumindest von zwei Seiten umfasst, wobei in der Figur ein vorderer Teil der Abdeckung weggelassen ist und lediglich ein hinterer Teil der Abdeckung 12 dargestellt ist. Die vordere Abdeckung 12 ist entsprechend der hinteren Abdeckung 12 ausgebildet. Seitliche Umfassungen ergänzen die Abdeckung 12, so dass die bewegbaren Elemente im Wesentlichen in der becherartigen Abdeckung liegen. Die Abdeckung 12 ist starr mit der Fahrzeugkarosserie im Bereich der Aufnahme für das Cabrioletverdeck verbunden.

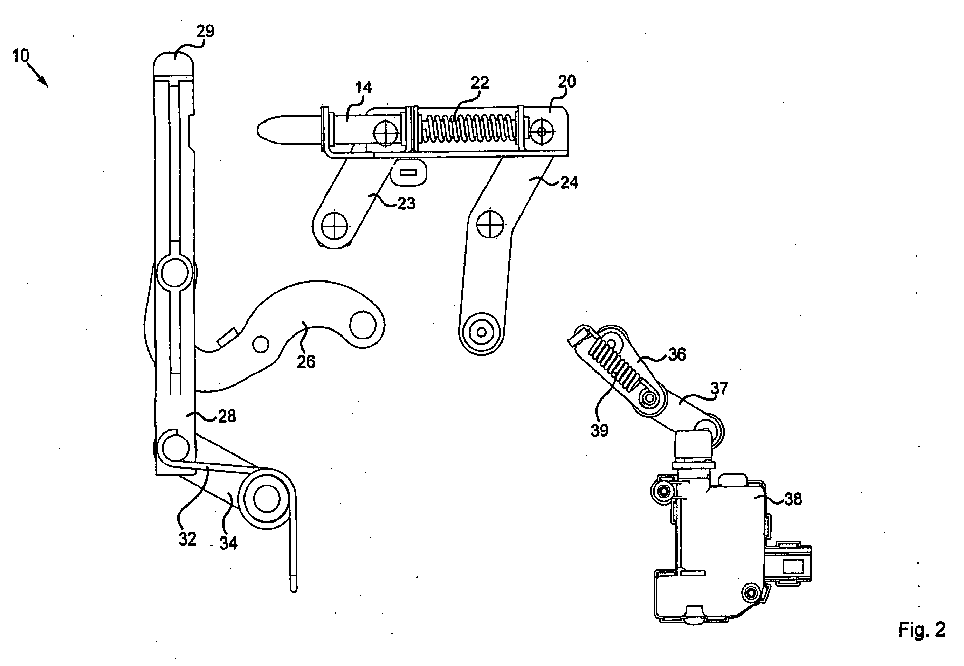

Figur 2 zeigt die Verriegelungseinrichtung 10 ohne Abdeckungen in einer Explosionsansicht.

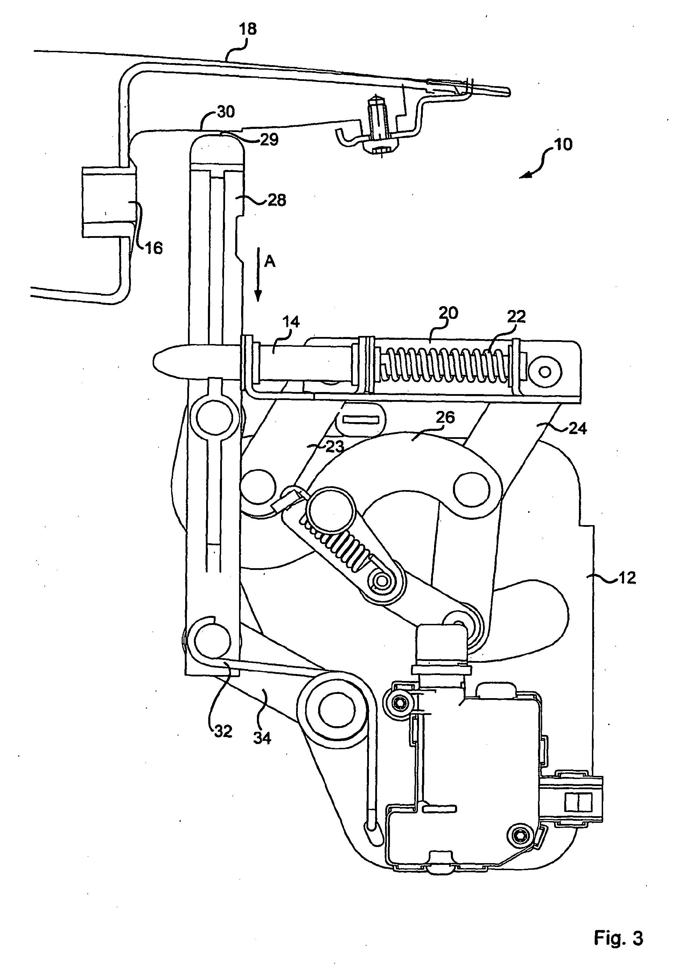

Die Verriegelungseinrichtung 10 enthält einen Rastbolzen 14, der mit einem verdeckseitig vorgesehenen Rastloch 16 (siehe Figuren 3 bis 6) zusammenwirkt, um das Verdeck 18 bezüglich der nicht dargestellten Fahrzeugkarosserie zu fixieren, wenn das Verdeck 18 in der offenen Position des Cabrioletdachs abgelegt werden soll.

Der Rastbolzen 14 ist in einer in im Wesentlichen horizontaler Richtung angeordneten Halterung 20 translatorisch verschiebbar gelagert, so dass er seinerseits eine näherungsweise horizontale Verschiebebewegung in der Halterung 20 ausführen kann (links-rechts Richtung in Figuren 1 und 2). Außerdem ist der Rastbolzen 14 derart gelagert, dass er bezüglich der Halterung 20 mittels einer Schraubenfeder 22 in eine Rastrichtung, in der er mit dem Rastloch 16 verrastbar ist, vorbelastet werden kann.

Insbesondere wird bei einer Bewegung des Rastbolzens 14 nach rechts in Figuren 1 und 2 die Feder 22 gespannt, so dass sie den Rastbolzen 14 in Rastrichtung (nach links) vorbelastet.

Die Halterung 20 für den Rastbolzen ist ihrerseits beweglich gelagert, wozu ein aus Hebeln 23, 24 gebildetes Viergelenk verwendet wird. Der Hebel 23 ist dazu verschwenkbar an der Abdeckung 12 bzw. der Karosserie an einem seiner Enden gelagert, während das andere Ende verschwenkbar an der Halterung 20 gelagert ist. Entsprechend ist der Hebel 24, der als doppelschenkliger Hebel ausgebildet ist, am Kreuzungspunkt seiner Schenkel 24 drehbar an der Abdeckung 12 bzw. der Fahrzeugkarosserie gelagert, während ein freies Ende des Hebels 24 mit der Halterung 20 schwenkbar verbunden ist. Dadurch kann die Halterung 20 aus der in Figur 1 dargestellten Position, die einer Ruheposition der Verriegelungseinrichtung 10 entspricht, durch ein Schwenken der Hebel 23, 24 gegen den Uhrzeigersinn um deren jeweilige Lagerstellen an der Fahrzeugkarosserie mitverschwenkt werden. Durch das Viergelenk bleibt die Halterung 20 stets in etwa horizontaler Ausrichtung.

Die Dreh- oder Schwenkbewegung wird in den Hebel 24 mittels eines S-förmigen Hebels 26 eingeleitet, der an einem freien Ende am Hebel 24 und am anderen freien Ende an einem stangenförmig gestalteten Drücker 28 angebracht ist. Am Drücker 28 ist der S-förmige Hebel 26 drehbar gelagert. Der Drücker 28 ist seinerseits an der Karosserie bzw. der Abdeckung 12 verschiebbar gelagert, wobei die Verschieberichtung in der dargestellten Ausführungsform beispielsweise der Vertikalrichtung entspricht und somit im Wesentlichen senkrecht zur Bewegungsrichtung des Rastbolzens 14 ist. Ein freies Ende des S-förmigen Hebels 26 ist in einem mittleren Bereich des stangenartig ausgebildeten Drückers 28 drehbar befestigt. Ein Ende der Drückerstange 28 ragt in Richtung Cabrioletverdeck 18 (siehe Figuren 2 bis 6), wenn sich das Cabrioletverdeck seiner Aufbewahrungsposition für die offene Stellung des Cabrioletverdecks nähert. Insbesondere gelangt eine Stirnfläche 29 des Drückers 28 mit einer entsprechenden Gegenfläche 30 am Cabrioletverdeck 18 in Berührung, wenn das Verdeck 18 beispielsweise manuell geführt in seine Aufbewahrungsposition gebracht wird. Die Bewegungsrichtung des Verdecks 18 entspricht in dieser Endphase zum Einbringen in die Aufbewahrungsposition im Wesentlichen der Bewegungsrichtung des Drückers 28 (hoch-tief Richtung in den Figuren).

An der dem Stirnfläche 29 gegenüberliegenden freien Ende des Drückers 28 ist eine Schenkelfeder 32 angebracht, die in Figur 1 in ihrer entspannten Position gezeigt ist. Die Schenkelfeder 32 ist bei am weitesten in Richtung Cabrioletverdeck ausgefahrenem Drücker 28 entspannt, d.h. dann, wenn das Cabrioletverdeck 18 keine Kraft auf den Drücker 28 ausübt. Bei einer fortgesetzten Bewegung des Drückers 28 in die Verriegelungsposition, die über die Stirnfläche 29 vom Cabrioletverdeck 18 in den Drücker 28 eingeleitet wird (Bewegung nach unten), wird die Schenkelfeder 32 gespannt. Die Schenkelfeder 32 ist ihrerseits an einem Lagerpunkt an der Abdeckung 12 karosseriefest gelagert, an dem auch ein Hebel 34 schwenkbar gelagert ist, der mit dem der Stirnfläche 29 gegenüberliegenden Ende des Drückers 28 ebenfalls drehbar verbunden ist, so dass der Drücker 28 zu einer translatorischen Bewegung geführt wird.

Die Anordnung enthält ferner eine Betätigungseinrichtung, welche zwei drehbar miteinander verbundene Hebel 36, 37 als Kniehebel sowie einen beispielsweise motorisch oder manuell betriebenen Betätiger 38 enthält. Von den beiden miteinander verbundenen Kniehebeln 36, 37 der Betätigungseinrichtung ist einer an seinem freien Ende mit dem S-förmigen Hebel 26 in dessen mittlerem Bereich verbunden, während der andere mit dem freien Ende des doppelschenkligen Hebels 24, der eine Verbindung zwischen dem S-förmigen Hebel 26 und der Halterung 20 herstellt, drehbar verbunden ist. Der Betätiger 38 kann die Gelenkstelle zwischen den Kniehebeln 36, 37 der Betätigungseinrichtung bewegen und dadurch den S-förmigen Hebel 26 sowie die Hebel 23, 24 der Halterung 20 mitbewegen. Dadurch wird der Winkel zwischen dem S-förmigen Hebel 26 und dem Hebel 24 aufgespreizt oder verengt. Die Betätigungseinrichtung enthält ferner ein Federelement 39, welches die Hebelanordnung der Betätigungseinrichtung derart vorbelastet, dass sie in der in Figur 1 gezeigten Ruheposition (aufgespreizte Anordnung) ist. Bei abgeschlossener Betätigung der Betätigungseinrichtung kehren somit die Kniehebel 36, 37 und der Betätiger 38 durch die Wirkung des Federelements 39 in ihre Ausgangsposition ohne zusätzliche Kraftaufwendung zurück.

Nachfolgend wird die Arbeitsweise der Verriegelungseinrichtung 10 anhand der Figuren 3 bis 6 beschrieben.

In Figur 3 ist der Zustand gezeigt, bei der ein Cabrioletverdeck 18 nach dem Öffnen des Dachs im Ablagebereich abgelegt und verriegelt werden soll. Das in Figur 3 gezeigte Cabrioletverdeck 18 ist dabei soweit in die Ablageposition bewegt worden, dass es mit seiner Fläche 30 beginnt, die Stirnfläche 29 des Drückers 28 zu berühren. Die Verriegelungseinrichtung 10 kann dabei an nahezu jeder beliebigen Position des Cabrioletverdecks 18 angebracht sein, solange sie ausreichende Verriegelungskräfte sicherstellen kann, da die Verriegelungseinrichtung 10 im Wesentlichen selbsttätig wirkt und der Benutzer beim Arretieren keinen Zugang zu ihr haben muss.

Ausgehend von der in Figur 3 dargestellten Position, in der die Dachspitze mit der Gegenfläche 30 die Stirnfläche 29 berührt, wirkt die Federkraft der Schenkelfeder 32 einer fortgesetzten Schließbewegung des Verdecks 18 (Bewegung zur Ablage des Verdecks) entgegen und federt somit die Bewegung des Drückers 28 nach unten (Pfeil A in Figur 3) ab. Gleichzeitig wird die Feder 32 bei fortgesetzter Bewegung des Drückers 28 in Bewegungsrichtung A zunehmend gespannt.

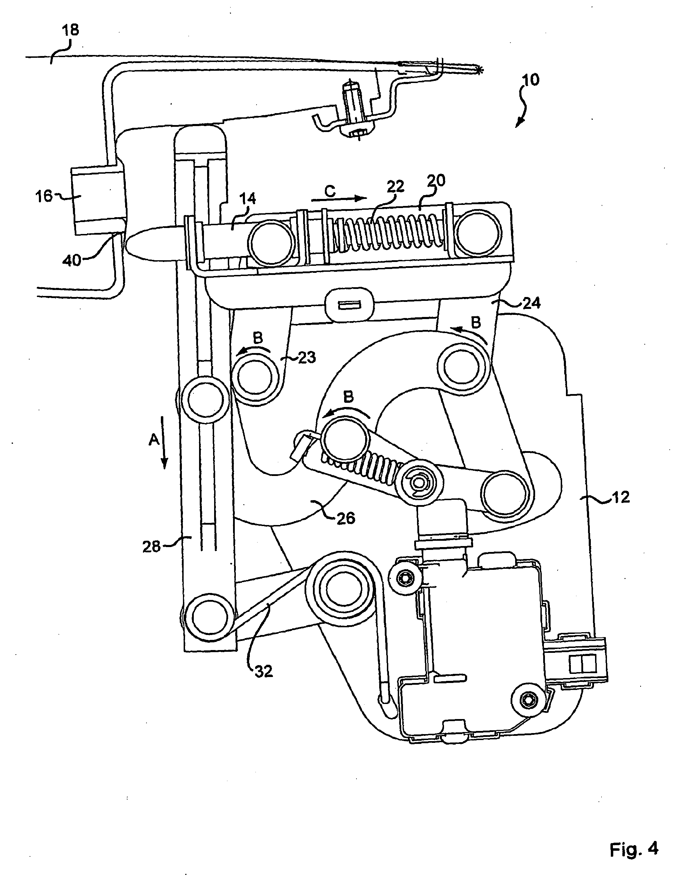

In Figur 4 ist die Anordnung in einer weiter fortgesetzten Schließposition, d.h. unmittelbar vor der Verrastung des Rastbolzens 14 mit dem Rastloch 16 am Verdeck 18, gezeigt. Durch die fortgesetzte Bewegung des Drückers 28 in Richtung A wird der S- förmige Hebel 26 ebenfalls verschwenkt und bewegt dadurch den Hebel 24 der Halterung 20 mit, welche wiederum durch das Viergelenk aus den Hebeln 23, 24 in einer im Wesentlichen horizontalen Lage verbleibt oder verschoben wird. Die Schwenkrichtung des S-förmigen Hebels 26 ist durch den Pfeil B in Figur 4 bezeichnet, ebenso diejenige der Hebel 23, 24. Durch die Schwenkbewegung der Hebel 23, 24 in Richtung des Pfeils B bewegt sich die Halterung 20 mit der Schraubenfeder 22 und dem an der Halterung 20 gelagerten Rastbolzen 14 auf das Rastloch 16 zu, d.h. in eine aktive Position, in welcher ein Eingriff zwischen dem Rastbolzen 14 und dem Rastloch 16 möglich ist.

Dabei gelangt die Spitze des Rastbolzens 14 in Berührung mit der Umgebung des Rastlochs 16, welche als Gleitfläche 40 ausgebildet ist. Durch die Wirkung der Gleitfläche 40 wird der Rastbolzen 14 gegenüber der Halterung 20 translatorisch verschoben (Pfeil C), so dass die Feder 22 gespannt wird und den Rastbolzen 14 in Arretierrichtung vorbelastet.

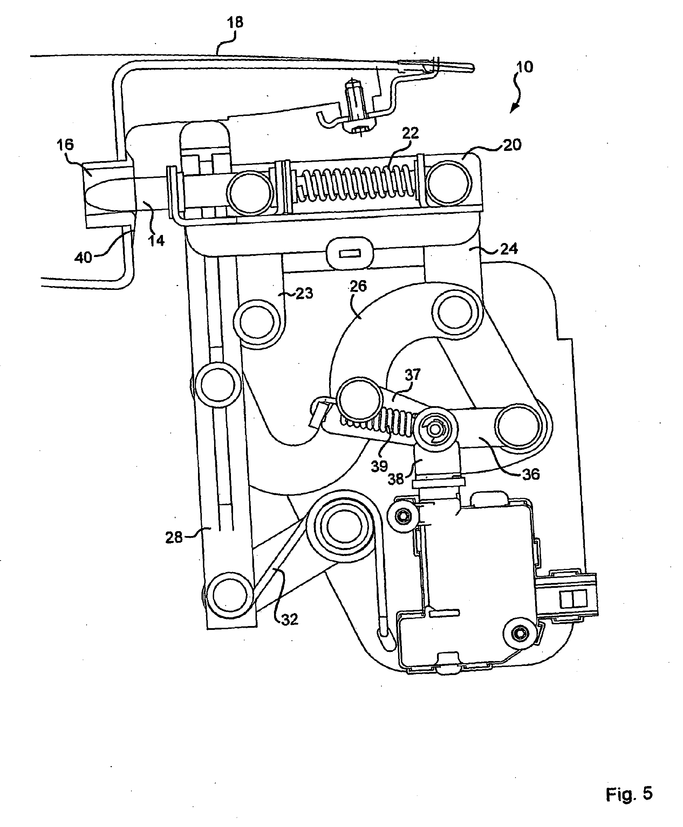

Bei einer weiter fortgesetzten Bewegung des Cabrioletverdecks 18 in Richtung zur Ablage (Pfeil A) gleitet der Bolzen 14 entlang der Gleitfläche 40 und die Feder 22 wird zunehmend weiter gespannt, einhergehend mit fortgesetzter Abwärtsbewegung der Dachspitze. Kurz bevor die Dachspitze die vollständig abgelegte Position erreicht hat (Arretierposition), wird die Spitze des Rastbolzens 14 durch die vorgespannte Druckfeder 22 in das Rastloch 16 gedrückt (Figur 5). Dies entspricht der Verriegelungsposition des Cabrioletverdecks 18.

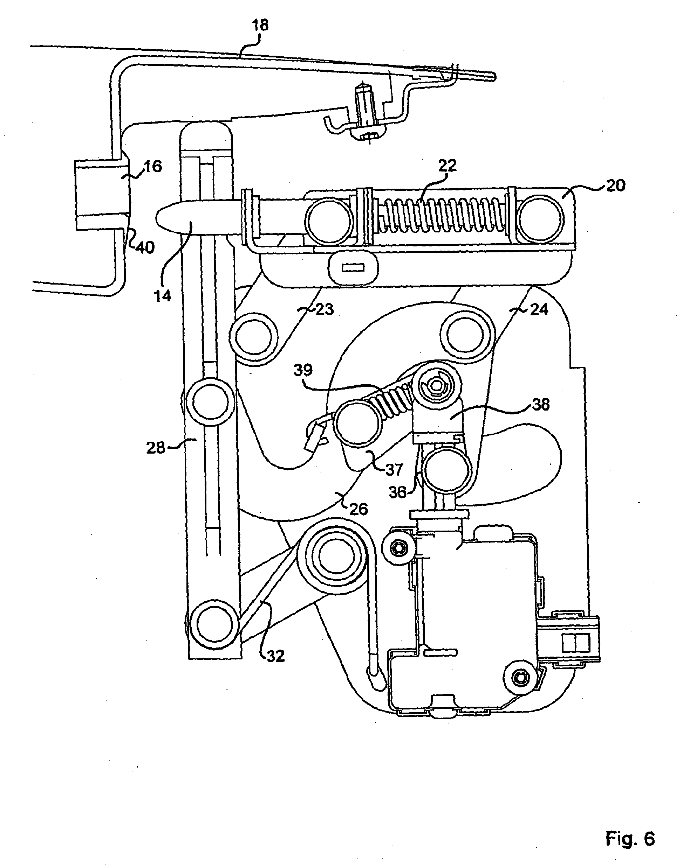

Zum Lösen der in Figur 5 gezeigten Arretierposition wird der Betätiger 38 der Betätigungseinrichtung gegen die Kraft des Federelements 39 bewegt, was motorisch oder manuell geschehen kann. Der Betätiger 38 drückt dabei den aus den Hebeln 36, 37 gebildeten Kniehebel in die obere Totlage, wodurch der S-förmige Hebel 26 mitbewegt wird, welcher wiederum die Hebel 23, 24 in die Ruheposition der Verriegelungseinrichtung bewegt und somit den Rastbolzen 14 aus dem Rastloch 16 zieht (Figur 6). Sobald der Rastbolzen 14 das Rastloch 16 verlassen hat, kann die Schenkelfeder 32 ebenfalls in ihre entspannte Lage zurückkehren, wodurch das Cabrioletverdeck 18 durch den Drücker 28 nach oben gedrückt wird. Somit trägt der Drücker, assistiert durch die Schenkelfeder 32, dazu bei, die Bewegung des Cabrioletverdecks 18 aus der Ablageposition in die geschlossene Position des Verdecks zumindest am Anfang der Bewegung zu unterstützen.

### Bezugszeichen

- 10: Verriegelungseinrichtung
- 12: Abdeckung
- 14: Rastbolzen
- 16: Rastloch
- 18: Verdeck
- 20: Halterung
- 22: Schraubenfeder
- 23: Hebel
- 24: Hebel
- 26: S-förmiger Hebel
- 28: Drücker
- 29: Stirnfläche
- 30: Gegenfläche
- 32: Schenkelfeder
- 34: Hebel
- 36: Kniehebel
- 37: Kniehebel
- 38: Betätiger
- 39: Federelement
- 40: Gleitfläche

## Patentansprüche

1. Verriegelungseinrichtung (10) für ein Cabrioletverdeck (18) zum Verriegeln des Cabrioletverdecks in seiner geöffneten Stellung, enthaltend ein Rastelement (14) und ein damit zur Verriegelung in Eingriff bringbares Gegenelement (16), wobei das Rastelement oder das Gegenelement am Verdeck (18) angebracht ist und das andere Element aus Rastelement und Gegenelement karosserieseitig gelagert ist, und wobei eines der Elemente (14, 16) durch eine Vorbelastungseinrichtung (22) in Verriegelungsrichtung vorbelastbar in einer Halterung (20) verschiebbar gelagert ist, **dadurch gekennzeichnet daß** die Halterung zusammen mit der Vorbelastungseinrichtung (22) und dem in der Halterung (20) gelagerten Element (14) in Abhängigkeit von der Bewegung des Cabrioletverdecks (18) in eine aktive Position, in der ein Eingriff zwischen Rastelement und Gegenelement möglich ist, und in eine Ruheposition, in der kein Eingriff möglich ist, bewegt wird.

2. Verriegelungseinrichtung (10) nach Anspruch 1, **dadurch gekennzeichnet, dass** das Rastelement ein Rastbolzen (14) ist, der mit einem verdeckseitigen Rastloch (16) als Gegenelement zusammenwirkt, wobei der Rastbolzen zusammen mit der Vorbelastungseinrichtung (22) in der Halterung (20) gelagert ist.

3. Verriegelungseinrichtung (10) nach Anspruch 2, **dadurch gekennzeichnet, dass** der Rastbolzen (14) in der aktiven Position mit einem Rastbereich (40) in der Umgebung des Rastlochs (16) am Cabrioletverdeck (18) derart zusammenwirkt, dass der Rastbolzen entgegen der Vorbelastungskraft der Vorbelastungseinrichtung (22) bei fortgesetzter Bewegung des Cabrioletverdecks in die Verriegelungsposition gedrückt wird, bis der Rastbolzen (14) das Rastloch (16) erreicht.

4. Verriegelungseinrichtung (10) nach einem der vorhergehenden Ansprüche, **dadurch gekennzeichnet, dass** ein Drücker (28) vorgesehen ist, der der Bewegung des Cabrioletverdecks (18) folgt und mit einem Federelement (32) derart gekoppelt ist, dass das Federelement gespannt wird, wenn das Cabrioletverdeck in die Verriegelungsposition gebracht wird.

5. Verriegelungseinrichtung (10) nach Anspruch 4, **dadurch gekennzeichnet, dass** der Drücker (28) mit der Halterung (20) derart gekoppelt ist, dass bei einer translatorischen, der Bewegung des Cabrioletverdecks (18) in die Verriegelungsposition folgenden Bewegung des Drückers (28) die Halterung (20), die Vorbelastungseinrichtung (22) und das in der Halterung gelagerte Element (14) zusammen in die aktive Position bewegt werden.

6. Verriegelungseinrichtung (10) nach einem der vorhergehenden Ansprüche, **dadurch gekennzeichnet, dass** eine Betätigungseinrichtung (36, 37, 38) vorgesehen ist, die mit der Halterung (20) derart zusammenwirkt, dass die Halterung zusammen mit dem daran gelagerten Element (14) und der Vorbelastungseinrichtung (22) außer Eingriff mit dem anderen Element bewegt wird, wenn die Betätigungseinrichtung betätigt wird.

7. Cabrioletverdeck mit einer Verriegelungseinrichtung (10) nach einem der vorhergehenden Ansprüche.

## Claims

1. Locking device (10) for a convertible top (18) for locking the convertible top in its opened position, comprising a catch element (14) and an opposing element (16) bringable into engagement therewith for locking, wherein the catch element or the opposing element is attached on the convertible top (18) and the other element of the catch element and the opposing element is borne on a vehicle-body-side, and wherein one of the elements (14, 16) is displaceably borne in a retainer (20) and is biased in a locking direction by a biasing device (22), **characterised in that** the retainer is moved together with the biasing device (22) and with the element (14) borne in the retainer (20) as a function of the movement of the convertible top (18) into an active position, in which active position an engagement between the catch element and the opposing element is possible, and into an idle position, in which no engagement is possible.

2. Locking device (10) according to claim 1, **characterised in that** the catch element is a catch pin (14) that cooperates with a convertible-top-side catch hole (16) serving as the opposing element, wherein the catch pin is borne in the retainer (20) together with the biasing device (22).

3. Locking device (10) according to claim 2, **characterised in that,** in the active position, the catch pin (14) cooperates with a catch area (40) in the surrounding area of the catch hole (16) on the convertible top (18) such that the catch pin is pressed against the biasing force of the biasing device (22) when the convertible top moves further into the locking position, until the catch pin (14) reaches the catch hole (16).

4. Locking device (10) according to one of the preceding claims, **characterised in that** a pusher (28) is provided that follows the movement of the convertible top (18) and is coupled with a spring element (32) such that the spring element is tensioned when the convertible top is brought into the locking position.

5. Locking device (10) according to claim 4, **characterised in that** the pusher (28) is coupled with the retainer (20) such that, during a translational movement of the pusher (28), which follows the movement of the convertible top (18) into the locking position, the retainer (20), the biasing device (22) and the element (14) borne in the retainer are moved together into the active position.

6. Locking device (10) according to one of the preceding claims, **characterised in that** an actuation device (36, 37, 38) is provided that cooperates with the retainer (20) such that the retainer is moved together with the element (14) borne thereon and with the biasing device (22) out of engagement with the other element when the actuation device is actuated.

7. Convertible top having a locking device (10) according to one of the preceding claims.

## Revendications

1. Installation de verrouillage (10) pour une capote de cabriolet (18) pour verrouiller la capote de cabriolet dans sa position ouverte, comportant un élément d'accrochage (14) et un élément complémentaire (16) qui est mis en coopération avec celui-ci pour le verrouillage, l'élément d'accrochage ou l'élément complémentaire étant installé sur la capote (18) et l'autre élément, c'est-à-dire l'élément d'accrochage ou l'élément complémentaire étant monté du côté de la carrosserie et l'un des éléments (14, 16) est chargé en précontrainte dans la direction de verrouillage par une installation de précontrainte (22), en étant monté coulissant dans un support (20),
**caractérisée en ce que**
le support avec l'installation de précontrainte (22) et l'élément (14) monté dans le support (20) peut être déplacé en fonction du mouvement de la capote de cabriolet (18) dans une position active dans laquelle l'élément d'accrochage et l'élément complémentaire peuvent venir en prise et une position de repos dans laquelle aucune prise n'est possible.

2. Installation de verrouillage (10) selon la revendication 1,
**caractérisée en ce que**
l'élément d'accrochage est un goujon d'accrochage (14) coopérant avec un orifice d'accrochage (16) côté capote, constituant l'élément complémentaire, le goujon d'accrochage étant monté dans le support (20) avec l'installation de précontrainte (22).

3. Installation de verrouillage (10) selon la revendication 2,
**caractérisée en ce que**
le goujon d'accrochage (14) coopère en position active avec une zone d'accrochage (40) dans l'environnement de l'orifice d'accrochage (16) de la capote de cabriolet (18) de façon que le goujon d'accrochage soit poussé contre la force de précontrainte de l'installation de précontrainte (22) lorsque la capote de cabriolet poursuit son mouvement dans la position de verrouillage jusqu'à ce que le goujon d'accrochage (14) atteigne l'orifice d'accrochage (16).

4. Installation de verrouillage (10) selon l'une des revendications précédentes,
**caractérisée par**
un poussoir (28) qui suit le mouvement de la capote de cabriolet (18) et est couplé à un élément de ressort (32) pour tendre l'élément de ressort lorsque la capote de cabriolet est mise en position de verrouillage.

5. Installation de verrouillage (10) selon la revendication 4,
**caractérisée en ce que**
le poussoir (28) est couplé au support (20) de façon que pour un mouvement de translation du poussoir (28) qui suit le mouvement de la capote de cabriolet (18) en position de verrouillage, le support (20), l'installation de précontrainte (22) et l'élément (14) logé dans le support viennent en position active.

6. Installation de verrouillage (10) selon l'une des revendications précédentes,
**caractérisée par**
une installation d'actionnement (36, 37, 38) qui coopère avec le support (20) de façon que le support et l'élément (14) qu'il porte ainsi que l'installation de précontrainte (22) viennent hors de prise de l'autre élément lorsque l'installation d'actionnement est commandée.

7. Capote de cabriolet comportant une installation de verrouillage (10) selon l'une des revendications précédentes.
